# EUROPÄISCHE PATENTSCHRIFT

(11) **EP 3 222 557 B1**
(45) Veröffentlichungstag und Bekanntmachung des Hinweises auf die Patenterteilung: **19.12.2018**
(21) Anmeldenummer: 16163869.7
(22) Anmeldetag: 05.04.2016
(51) Int. Cl.: B65D 85/804, B65D 81/32

(54) **KAPSELSYSTEM**
CAPSULE SYSTEM
SYSTEME DE CAPSULE

(30) Priorität: 22.03.2016 EP 16161748
(43) Veröffentlichungstag der Anmeldung: 27.09.2017
(73) Patentinhaber: Mühlemann IP GmbH, 8260 Stein am Rhein (CH)
(72) Erfinder: MÜHLEMANN, Rolf, 8255 Schlattingen (CH)
(74) Vertreter: Manske, Jörg

(56) Entgegenhaltungen:
- WO-A1-2014/057094
- WO-A1-2015/124526
- WO-A1-2016/005155
- US-A1- 2014 161 940

## Beschreibung

Die vorliegende Erfindung betrifft ein Kapselsystem mit einer geschlossenen Extraktionskapsel mit einem injektionsseitigen Boden mit angeformter, konisch zur Extraktionsseite sich erweiternder, mit einer Versiegelungsfolie verschlossenen Öffnung, mit einem peripher nach aussen gerichteten Flansch.

Vor wenigen Jahren sind grundlegende Schutzrechte, die auf Kapseln zur Fertigung von Espresso-Kaffee nach dem Extraktionsverfahren lauten, abgelaufen. Seither hat eine ausserordentlich dynamische Entwicklung stattgefunden. Obwohl auch in den frühestens Schutzrechten bereits darauf hingewiesen wurde, dass solche Kapseln nicht nur zur Aufbereitung von Kaffee geeignet sind, sondern auch andere Getränke und flüssige Nahrungsmittel mittels solchen Kapseln gefertigt werden können, haben sich bis heute diese Kapseln ausser im Getränkemarkt, und auch hier im Wesentlichen beschränkt auf Kaffee und Tee, nicht etabliert.

Ein Grund hierfür besteht darin, dass, falls in ein und derselben Kapsel verschiedene, zu mischende Anteile vorhanden sind, praktisch immer mit einer erheblichen Geschmackseinbusse zu rechnen ist. So lässt sich in Kaffeekapseln mit frisch gemahlenem Kaffee praktisch keine Milchbeigabe realisieren, auch nicht in Form von Milchpulver, ohne dass der frisch gemahlene Kaffee erheblich an Reinheit des Geschmacks verliert. Lösungen, bei denen die Kapsel mehrere Kammern aufweist, in denen verschiedene zu extrahierende Komponenten untergebracht sind, haben sich bis heute auf dem Markt nicht durchsetzen können. Die heute auf dem Markt verbreiteten Kapselsysteme haben sich auch für die Zubereitung von Suppen nicht bewährt. Lediglich, wenn in der Kapsel nur volllösliche Anteile enthalten sind, lassen sich diese Anteile heute auch vollumfänglich bei der Zubereitung aus der Kapsel ausschwemmen. Die nichtlöslichen Anteile werden durch die maschinenseitig oder kapselseitig vorhandenen Siebplatten zurückgehalten und würden diese sogar verstopfen. Suppen, die jedoch nur volllösliche Anteile enthalten, wie reine Fleisch- oder Hefeextrakte, schränken den Variationenreichtum erheblich ein.

Dokument US2014/0161940 offenbart eine Kapsel mit eine Extraktionskapsel, die in eine Haltekapsel gehalten ist.

Es ist folglich die Aufgabe der vorliegenden Erfindung, ein Kapselsystem anzubieten, welches es erlaubt, mit einem Extraktionsmedium einerseits volllösliche Anteile aus der Extraktionskapsel zu entnehmen und andererseits lösliche oder auch weniger oder nicht lösliche Anteile mittels eines Mischmediums aus dem Kapselsystem dem Extraktionsmedium beizumischen.
Diese Aufgabe löst ein Kapselsystem der eingangs genannten Art mit den Merkmalen des Anspruches 1.

Dank der erfindungsgemässen Lösung eines Kapselsystems, welches immer aus zwei Kapseln besteht, nämlich einerseits einer Haltekapsel und andererseits einer in der Haltekapsel gehaltenen Extraktionskapsel, ist ein grosser Variationsreichtum gegeben. Dies erlaubt es einerseits, durch die Extraktionskapsel ein Extraktionsmedium zu injizieren und anderseits durch den Raum zwischen der Extraktionskapsel und der Haltekapsel ein Mischmedium zu führen, welches die Extraktionskapsel umströmt. Je nach dem, ob diese beiden Medien gleichzeitig oder nacheinander durch das Kapselsystem geführt werden, vermischen sich die beiden Medien entweder erst in einem Auffanggefäss, wie beispielsweise ein Becher oder ein Teller, oder bereits in einem Bereich unterhalb der Extraktionskapsel in der Haltekapsel.

Soll die Vermischung der beiden Fliessmedien innerhalb des Kapselsystems erfolgen, wirkt der Raum unterhalb der Extraktionskapsel in der Haltekapsel als Mischraum und kann mit entsprechenden Strömungsschikanen versehen sein, die eine erwünschte Durchmischung des Extraktionsmediums mit dem Mischmedium ermöglichen. Dabei kann sichergestellt werden, dass beispielsweise aus der Extraktionskapsel keine unerwünschten unlösliche Anteile in das fertige Endprodukt gelangen, während andererseits zum Teil unlösliche oder schwer lösliche Anteile, die mittels dem Mischmedium dem Extraktionsmedium beigefügt werden, sehr wohl in das fertige Produkt gelangen können.

In der Zeichnung sind Ausführungsbeispiele des Erfindungsgegenstandes in vereinfachter Darstellung gezeigt. Es zeigt:
- Fig. 1: einen diametralen Vertikalschnitt durch eine erste erfindungsgemässe Ausführungsform des Kapselsystems;
- Fig. 2: einen Teilschnitt durch den extraktionsseitigen Boden der Haltekapsel in einer Position vor der Perforation der Folie der Extraktionskapsel;
- Fig. 3: zeigt denselben diametralen Teilschnitt wie in Fig. 2, jedoch in einer Position, in der die Folie der Extraktionskapsel bereits perforiert ist;
- Fig. 4: zeigt eine Variante des Kapselsystems nach Fig. 1 mit einer separaten Perforationsplatte;
- Fig. 5: stellt das erfindungsgemässe Kapselsystem mit einer Haltekapsel mit geänderter Konsolenform und einer Extraktionskapsel mit verbreitertem Flansch sowie
- Fig. 6: dieselbe Haltekapsel mit einer geänderten Peforationsplatte, beide Versionen wiederum in einem Diametralschnitt, und
- Fig. 7: zeigt eine Ansicht von oben auf das Kapselsystem nach Fig. 5 oder 6 mit einer besonders gestalteten Form des Flansches der Extraktionskapsel.

Das erfindungsgemässe Kapselsystem ist mit 1 bezeichnet. Dieses Kapselsystem umfasst zwei getrennt gefertigte Kapseln, nämlich eine äussere, als Haltekapsel 2 bezeichnete Kapsel und eine in der Haltekapsel 2 liegende kleinere Kapsel, die als Extraktionskapsel 3 bezeichnet wird. Der Begriff Extraktionskapsel weist zwar einerseits auf den möglichen Inhalt dieser Kapsel 3 hin, doch kann die Extraktionskapsel neben extraktionsfähigen Mitteln wie Kaffee oder Tee auch verschiedenen Konzentrate, wie Fruchtsaftkonzentrate, die in verschiedener Viskositätsformen erhältlich sind oder auch Hefe-, Fleisch- oder Gemüseextrakte, die sowohl in flüssiger als auch in Pulverform darin enthalten sein können, enthalten. Sowohl Tee als auch Kaffee, die nicht in löslicher Form vorliegen und somit nicht aus gefriergetrockneten Konzentraten gewonnen sind, werden somit nicht aufgelöst, sondern werden wie traditionell in einer Art Brühverfahren extrahiert. Mit anderen Worten je nach Inhalt der Extraktionskapsel wird diese vollständig aufgelöst und ausgeschwemmt, oder die unlöslichen Anteile werden in der Kapsel zurückgehalten, entweder mittels einer Siebplatte oder -matte innerhalb der Extraktionskapsel 3 oder mit einer Sieb- und Perforationsplatte, die zwischen der Extraktionskapsel 3 und der Haltekapsel 2 angeordnet ist. Hierauf wird später noch eingegangen.

Das Kapselsystem ist aber nicht nur auf Nahrungsmittelzwecke beschränkt verwendbar, sondern auch im pharmazeutischen Bereich als auch im industriellen Bereich, beispielsweise zur Mischung von Klebstoffen oder Primern geeignet.

Die Extraktionskapsel 3 hat einen injektionsseitigen Boden 30, an den eine konische Mantelwand 34 anschliesst und sich so zu einer extraktionsseitigen Öffnung 31 erweitert. Im Bereich der extraktionsseitigen Öffnung 31 ist an der konischen Mantelwand 34 ein peripher nach aussen gerichteter Flansch 32 angeformt. Die extraktionsseitige Öffnung 31 ist mittels einer Versiegelungsfolie 33 verschlossen, wobei die Versiegelungsfolie 33 auf dem Flansch 32 aufgeschweisst oder aufgeklebt ist. Die Versiegelungsfolie 31 kann eine beschichtete oder unbeschichtete Aluminiumfolie oder eine ein- oder mehrlagige Kunststofffolie sein, die entsprechend auch eine Aluminiumschicht oder eine andere gas- und/oder wasserdichte Sperrschicht enthalten kann.

Diese Extraktionskapsel 3 liegt mit ihrer extraktionsseitigen Öffnung 33 mit ihrer Versiegelungsfolie 33 nach unten in der äusseren, grösseren Haltekapsel 2.

Auch diese Haltekapsel 2 besitzt einen Boden 20, an den eine konische Mantelwand 21, die sich zu einer weiten injektionsseitigen Öffnung 26 hin erstreckt, anschliesst. An der Mantelwand 21 ist ein peripherer, radial nach aussen gerichteter Flansch 22 angeformt. Die Haltekapsel 2 und die Extraktionskapsel 3 sind in der Grösse bevorzugterweise so aufeinander abgestimmt, dass der injektionsseitige Boden 30 der Extraktionskapsel 3 fluchtend in derselben Ebene liegt, die vom umlaufenden Flansch 22 der Haltekapsel 2 aufgespannt wird. Bei dieser bevorzugten Ausgestaltungsform lässt sich im selben Arbeitsgang einerseits die Haltekapsel 2 sowohl auf dem umlaufenden Flansch 22 der Haltekapsel aufschweissen oder -kleben als auch auf den injektionsseitigen Boden 30 anschweissen oder -kleben. Hierbei wird bevorzugterweise nicht eine Versiegelungsfolie 24 über die gesamte Fläche des injektionsseitigen Bodens verschweisst, sondern lediglich in dessen Randbereich, wo zumindest eine randständige Schweisswulst vorhanden sein kann. Da solche Verschweissungen bevorzugterweise mittels Hochfrequenzschweissung erfolgt, können statt einer randständigen Schweisswulst auch mehrere konzentrische, dünne Schweissrippen vorhanden sein, womit die Schweissdauer reduziert wird und die Beeinflussung eines Nahrungsmittelgutes oder anderen Inhalts des Kapselsystems vermindert wird.

Die Extraktionskapsel 3 liegt in der Haltekapsel 2 nicht direkt auf deren extraktionsseitigen Boden auf, sondern in der Haltekapsel sind radial verlaufende Stützmittel 23 angeordnet. Auf diese Stützmittel 23 liegt die Extraktionskapsel mit ihrem nach aussen gerichteten Flansch 32 auf diese Stützmittel 23 auf.

Die Stützmittel 23 können verschiedene Ausgestaltungsformen aufweisen. Das Stützmittel kann beispielsweise auch eine umlaufende Konsole sein, in der in regelmässigen Abständen Durchbrüche eingeformt sind. Dies ist jedoch kunststofftechnisch eine relativ aufwändige Lösung, weil diese Konsole während des Spritzens nach oben gerichtet sein muss, damit der Kern entformbar bleibt und danach die Konsole nach unten gestülpt werden kann. Wesentlich einfacher und entsprechend auch bevorzugt ist jene Lösung, bei der die Stützmittel 23 als radial verlaufende Rippen 27 gestaltet sind. In jede dieser radial verlaufenden Rippen 27 ist jeweils eine etwa parallel zum Flansch 22 der Haltekapsel verlaufende Stufe 27 eingeformt. Diese Stufe 27 ist in etwa gleich breit oder schmäler als die Breite des Flansches 32 der Extraktionskapsel 3. Die Stufe 27 erstreckt sich nicht bis zur konischen Mantelwand 21 der Haltekapsel 2. So verbleibt zwischen jeweils zwei benachbarten Rippen 27 eine Durchströmungsöffnung 29 zwischen dem Flansch 32 der Extraktionskapsel 3 und der Mantelwand 21 der Haltekapsel 2. Unterhalb dem Flansch 32 und zwischen den radial verlaufenden Rippen 27 setzt sich die Durchströmungsöffnung 29 fort, so dass ein Mischmedium, welches im Bereich zwischen der Haltekapsel 2 und der Extraktionskapsel 3 durch die Versieglungsfolie 24 hindurch injiziert wird, durch diesen Zwischenraum via den Durchströmungsöffnungen 29 in den Bereich zwischen dem extraktionsseitigen Boden 20 der Haltekapsel 2 und der Versieglungsfolie 33 der Extraktionskapsel 3 strömen kann.

Der Raum zwischen der Versiegelungsfolie 33 der Extraktionskapsel 3 und dem extraktionsseitigen Boden 20 der Haltekapsel 2 bildet eine Mischkammer 40. In die Mischkammer 40 kann somit einerseits injizierte Flüssigkeit, die durch die Extraktionskapsel 3 geströmt ist, gelangen, wie auch ein Spülmedium, welches durch die Versiegelungsfolie 24 in einen ringförmigen Trog 4 zwischen der Haltekapsel 2 und der Extraktionskapsel 3 injiziert worden ist. In diesem ringförmigen Trog 4 können dann andere Nahrungsmittel, Medikamente oder technische Produkte löslicher, teillöslicher und teilweise unlöslicher Natur gelagert sein, die durch ein Mischmedium, welches durch die Versiegelungsfolie 24 in den ringförmigen Trog 4 injiziert wird, durch die Durchströmungsöffnungen 29 in die Mischkammer 40 gefördert werden. Die Mischkammer 40 weist eine zentrische Auslauföffnung 25 auf.

Auf dem extraktionsseitigen Boden 20 der Haltekapsel 2 können eine Vielzahl von Strömungsschikanen 41 angebracht sein, um eine entsprechende Durchmischung des Extraktionsmediums aus der Extraktionskapsel 3 und des Mischmediums aus dem ringförmigen Trog 4 innerhalb der Mischkammer 40 zu ermöglichen. Diese Vermischung wird erreicht durch die erwähnten Strömungsschikanen 41, die hier rein symbolisch eingezeichnet sind und gleichzeitig auch die Perforationsmittel 43 sein können, wie dies in den Ausführungsbeispielen bevorzugt der Fall ist.

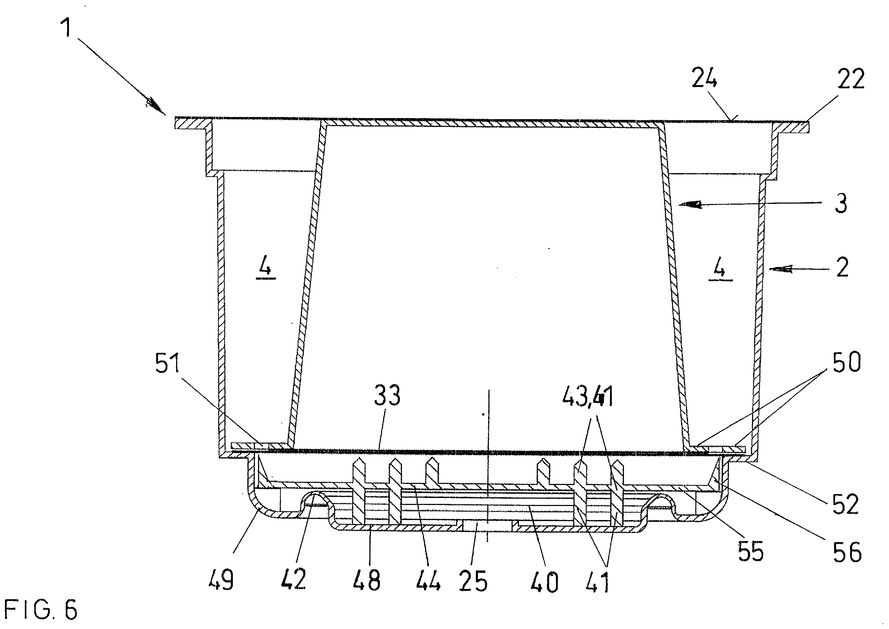

Auf den Strömungsschikanen 41 kann eine Sieb- und Perforationsplatte 42 liegen, wie dies die Figur 6 zeigt. Diese Strömungsschikanen 41 können aber auch selbst direkt als Performationsmittel gestaltet sein, welche die Versiegelungsfolie 33 der Extraktionskapsel 3 durchstossen können. Hierzu ist ein grosser zentrischer, plattenförmiger Teil 48 des extraktionsseitigen Bodens 20 mit einer ringförmigen Gelenkstelle 42 versehen. Die ringförmige Gelenkstelle 42 wird durch einen verdünnten Wandbereich in Form einer Aufstülpung gebildet. Der periphere Ansatz der Gelenkstelle 42 geht in einen lageunveränderlichen Randbereich 49 über. Der gegenüberliegende Ansatz der Gelenkstelle 42 ist mit der zentrischen Bodenplatte 48 verbunden. Hierdurch ist die Bodenplatte in axialer Richtung der Haltekapsel lageveränderlich.

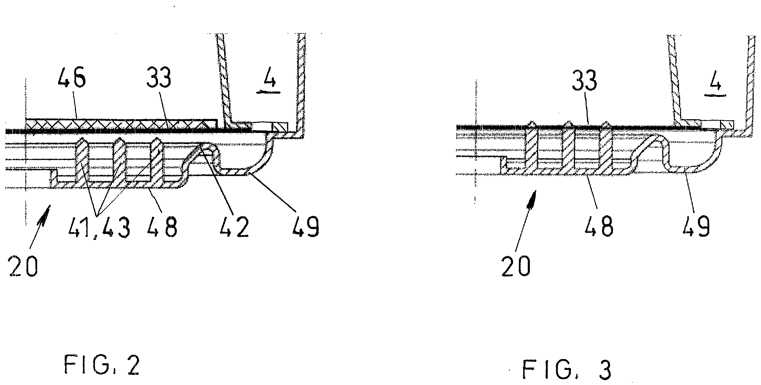

Im Zustand, wie in der Fig. 2 dargestellt, haben die Perforationsmittel 43, welche gleichzeitig die Strömungsschikanen 41 sein können, noch keine Berührung mit der Versiegelungsfolie 33 der Extraktionskapsel 3. Da aber beim vorliegenden Kapselsystem 1 die Haltekapsel etwas höher gestaltet ist als die Brühkammer, in der die Haltekapsel 2 eingelegt wird, so wird beim Schliessen der Brühkammer auf die extraktionsseitige Bodenplatte 48 Druck ausgeübt, und entsprechend wird die Bodenplatte 40 nach oben gedrückt und gelangt in die Position, wie in der Fig. 3 dargestellt. Hier liegt nun die Bodenplatte in derselben Ebene wie der lageunveränderliche Randbereich 49. Wie bereits erwähnt, kann auf den Strömungsschikanen 41 oder direkt auf der Bodenplatte 48 eine separate Sieb- und Perforationsplatte 44 angebracht sein. Diese Sieb- und Perforationsplatte 44 besitzt Perforationsmittel 43 und eine siebartige Lochung oder einen zentrischen Auslauf. Die in den Fig. 2 und 3 gezeigte Lösung zeigt eine Variante, die ohne eine Sieb- und Perforationsplatte 44 auskommt, wobei dann innerhalb der Extraktionskapsel 3 auf der Versiegelungsfolie 33 eine Siebplatte oder Siebmatte aufliegen kann. Eine solche Siebmatte oder Siebplatte ist selbstverständlich nur dann erforderlich, wenn der Inhalt der Extraktionskapsel Feststoffanteile enthält, die zurückgehalten werden sollen. Dies trifft z.B. dann zu, wenn in der Extraktionskapsel 3 Tee oder Kaffee in nicht löslicher Form vorhanden ist. Enthält jedoch die Extraktionskapsel 3 lediglich vollständig sich lösende bzw. flüssige Inhaltsstoffe, so kann auf eine Siebplatte oder Siebmatte 46 verzichtet werden. Dies trifft auf die Variante, wie in der Fig. 3 gezeigt, zu.

Der ringförmige Trog 4 ergibt sich aus der Formgebung der beiden das Kapselsystem 1 bildenden Kapseln 2, 3, nämlich der Haltekapsel 2 und der Extraktionskapsel 3. Jede Kapsel für sich hat immer eine konische Gestaltungsform. Dies hängt damit zusammen, dass auch im Extremfall, dass die Kapsel eine quasi zylindrische Mantelwand aufweist, diese in keinem Fall exakt zylindrisch sein kann, da immer ein Anzugswinkel erforderlich ist, um die Kapsel aus einer Spritzgussform zu entformen. Beide Kapseln werden immer aus Kunststoff gefertigt. Die innen liegende Extraktionskapsel kann im Prinzip aus Kunststoff tiefgezogen sein, wegen ihrer besonders einfachen Gestaltungsform aber auch bei einer tiefgezogenen Kapsel muss die Mantelwand zum Entformen einen Mindest-Anzugswinkel aufweisen. Bei einer spritzgusstechnisch gefertigten Kapsel kann dieser Anzugswinkel sogar etwas unter einem Grad liegen, bei einer tiefgezogenen Kapsel sind es jedoch immer einige Grade, die ein entsprechender Anzugswinkel aufweist. Je nach Wahl der Konizität kann der ringförmige Trog 4 ein mehr oder weniger grosses Volumen haben.

Um die Montage der Extraktionskapsel in der Haltekapsel zu vereinfachen, setzen sich die radialen Rippen 23 auch oberhalb der Stufe 27 fort. Hier verlaufen diese Rippen geneigt zur Innenseite der konischen Mantelwand 21 und bilden zentrierende Rampen 28. Beim Einsetzen der Extraktionskapsel 3 in der Haltekapsel 2 wird hier der umlaufende Flansch 32 der Extraktionskapsel 3 zentrierend auf die Stufe 27 geführt.

Dank dem, dass die radial verlaufenden Rippen 27 nicht nur an der konischen Mantelwand 21, sondern ebenfalls in den lageunveränderlichen Randbereich 49 des extraktionsseitigen Bodens 20 der Haltekapsel 2 angeformt sind, ergibt dies eine ideale Versteifung des lageunveränderlichen Randbereichs 49.

Das erfindungsgemässe Kapselsystem 1 lässt eine grosse Anzahl von Benutzungsmöglichkeiten zu. Neben der Aufnahme von Nahrungsmitteln können auch verschiedene andere lösbare und unlösbare Mittel in der Extraktionskapsel, wie auch im ringförmigen Trog 4 untergebracht sein, die in exakt vorgegebenem Mischungsverhältnis anliegen und mit unterschiedlichen Extraktionsmedien und Mischmedien in der Mischkammer vermengt werden können. So lassen sich auch unterschiedliche pharmazeutische Mittel sowie auch chemischtechnische Produkte, wie beispielsweise Klebstoffe oder dergleichen, kombinieren.

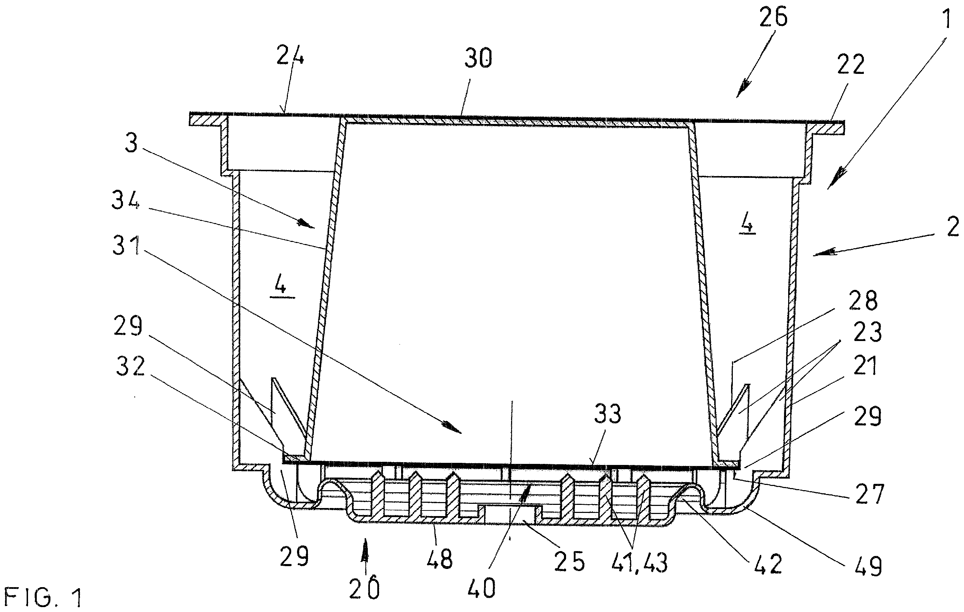

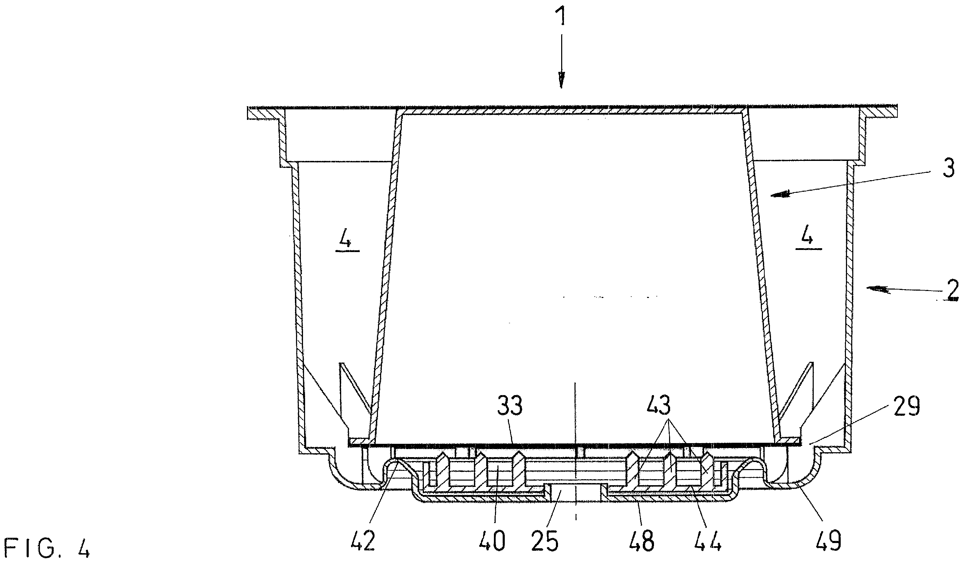

In der Fig. 4 ist eine Variante der Ausführung gemäss der Fig. 1 gezeigt. In dieser Ausführungsform liegt auf der Bodenplatte 48 eine Perforationsplatte 44 auf. Die Perforationsplatte 44 hat auch einen zentrische Auslauföffnung, die etwas grösser ist als die Auslauföffnung 25 in der Bodenplatte 48. Diese Bodenplatte 48 ist hier auf dem unteren Niveau gehalten, also in einer Situation vor der Durchführung der Extraktion. Die Bodenplatte 48 liegt folglich tiefer als der lagenunveränderliche Randbereich 49.

Bevor die Versieglungsfolie 24 auf die Haltekapsel 2 aufgeschweisst wird, aber nachdem die Extraktionskapsel 3 korrekt positioniert ist, lässt sich nun der Hohlraum des ringförmigen Troges 4 mit einem beizumischenden Material befüllen. Im vorliegenden Fall ist die Verbindung zwischen dem ringförmigen Trog und der Mischkammer 40 unverschlossen. Entsprechend lässt sich bei einer solchen Ausführungsform in den ringförmigen Trog kein fliessfähiges Material einfüllen. In den ringförmigen Trog kann aber durchaus pulver- oder griessförmiges Material, wie beispielsweise Zucker oder Milchpulver, eingefüllt werden. Beim Füllen des ringförmigen Troges 4 wird ein Teil durch die Durchströmungsöffnungen 29 in die ringförmige Rinne gelangen, die im Bereich des lageunveränderlichen Randbereiches 49 des Bodens 20 vorhanden ist. Dieses Schüttgut bildet dann einen Schüttkegel, der schliesslich die Durchströmungsöffnung 29 schliesst. Bei einer solchen Variante muss man selbstverständlich die Auslauföffnung 25 mit einer abreissbaren Lasche verschliessen. Sinnvollerweise sieht man hierzu eine mindestens annähernd gasdichte Folie vor. Dies kann eine Aluminiumfolie oder eine mehrlagige Kunststofffolie sein, wobei gleich wie bei der Versiegelungsfolie 24 bzw. 33 diese Folie ausgeschweisst oder aufgeklebt werden kann.

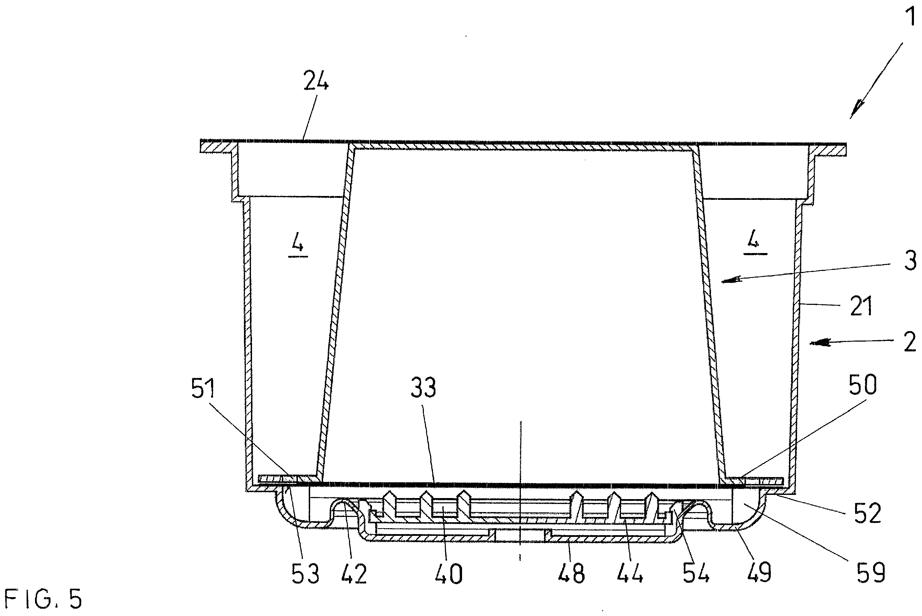

Bei dieser Ausführung gemäss Figur 5 verzichtet man auf die radial ausgerichteten Rippen 23. Stattdessen weist hier die konische Mantelwand in ihrem untersten Bereich einen umlaufenden Absatz 52 auf, auf den der äussere Bereich des verbreiterten Flansches 50 aufliegt. Um auch hier wiederum den ringförmigen Trog 4 zu befüllen, sind hier zwei verschiedene Möglichkeiten denkbar. Im einen Fall wird man die Versiegelungsfolie 33 der Extraktionskapsel 3 lediglich bis zu den Durchbrüchen 51 im verbreiterten Flansch 50 erstrecken lassen. Auf diese Weise kann der ringförmige Trog 4 wiederum gleich befüllt werden, wie zuvor anhand der Fig. 4 beschrieben, wobei ein Teil durch die offenen Durchbrüche 51 wiederum in die ringförmige Rinne im Bereich des lageunveränderlichen Randbereiches 49 gelangt.

Eine zweite Möglichkeit besteht darin, dass man direkt auf den umlaufenden Absatz 52 eine weitere Folie anbringt, die den Trog 4 gegenüber der Mischkammer 40 verschliesst. Um diese Folie zumindest im Bereich der Durchbrüche 51 zu öffnen, kann man eine besonders dünne, etwas brüchige Versiegelungsfolie 33 verwenden, die unter dem Druck im ringförmigen Trog 4, der aufgebaut wird, wenn mittels geräteseitiger Injektionsnadeln Mischmedium in den ringförmigen Trog 4 induziert wird, reisst.
Eine alternative Lösung könnte darin bestehen, dass man diese darunter angebrachte Folie 53 aus einem wasserlöslichen Material fertigt, beispielsweise auf Zucker- oder Gelatine-Basis.

Bei der hier gezeigten Ausführungsform ist die Perforationsplatte distanziert über der Bodenplatte 48, die Perforationsplatte 44 mittels Haltemitteln 54 gehalten. Der Spalt zwischen der Perforationsplatte 44 und der Gelenkstelle 42 genügt, damit ein volllösliches Mittel aus dem ringförmigen Trog 4 unter die Perforationsplatte gelangen kann und von dort durch die Auslauföffnung 25 nach aussen gelangen kann. Eine solche Lösung ist beispielsweise für verschiedene pulverförmige Extrakte oder auch Milchpulver geeignet.

Eine letzte Variante des erfindungsgemässen Kapselsystems 1 ist in der Fig. 6 gezeigt. Die Haltekapsel 2 ist hier gleichgestaltet, wie bei der Ausführung gemäss der Fig. 5, und dies trifft auch für die Gestaltung der Extraktionskapsel 3 zu. Auch hier ist diese Extraktionskapsel 3 mit einem verbreiterten Flansch 50 ausgebildet. Im Flansch 50 sind auch wieder Durchbrüche 51 vorhanden. Bei dieser Ausführungsvariante kann entweder die Versiegelungsfolie 33 sich bis über die Durchbruchsöffnungen 51 im verbreiterten Flansch 50 erstrecken, oder eine durchgehende Folie ist auf dem umlaufenden Absatz 52 aufgeschweisst, während die Versiegelungsfolie 33 der Extraktionskapsel 3 sich lediglich bis zu den Durchbruchöffnungen 51 erstreckt.

In den Varianten gemäss den Figuren 5 und 6 ist es sinnvoll, im Bereich des lageunveränderlichen Randbereiches 49 radial verlaufende Versteifungsrippen 59 vorzusehen.

In dieser Ausführungsform ist auch wieder eine gesonderte Perforationsplatte 44 vorhanden. Diese Perforationsplatte 44 hat auf ihrer Unterseite Strömungsschikanen 41, die direkt auf der Bodenplatte 48 des Bodens 20 der Haltekapsel 2 ruhen. Die eigentliche Perforationsplatte 44 erstreckt sich über den Bereich der Bodenplatte 48 bis zu der ringförmigen Gelenkstelle 42. Die Perforationsplatte 44 besitzt aber radial nach aussen verlängerte Arme 55, auf denen vertikal nach oben gerichtete Perforationsdorne 56 angebracht sind. Diese weisen wie die Perforationsmittel 43 nach oben und können die Versiegelungsfolie 33 im Bereich der Durchbruchsöffnungen 51 im verbreiterten Flansch 50 durchstossen.

So werden bei Druck auf die Bodenplatte 48 die Perforationsmittel 43 ebenso wie die Perforationsdorne 56 die Versiegelungsfolie 33 durchstossen. Diese Lösung ist nicht trivial in der Umsetzung, da die Durchbruchsöffnungen 51 im verbreiterten Flansch 50 und die Perforationsdorne 56 an der Perforationsplatte 44 fluchtend aufeinander auseinander ausgerichtet sein müssen, damit dies überhaupt möglich ist. Dies bedingt jedoch, dass entsprechende Mittel in der Haltekapsel 2 vorhanden sein müssen, die eine exakte Ausrichtung der Perforationsplatte 44 relativ zur Haltekapsel 2 sicherstellen und andererseits eine ebenso exakte Ausrichtung der Extraktionskapsel in der Haltekapsel 2. Dies bedingt auch sehr aufwändige Montagemaschinen, um dies überhaupt ermöglichen zu können.

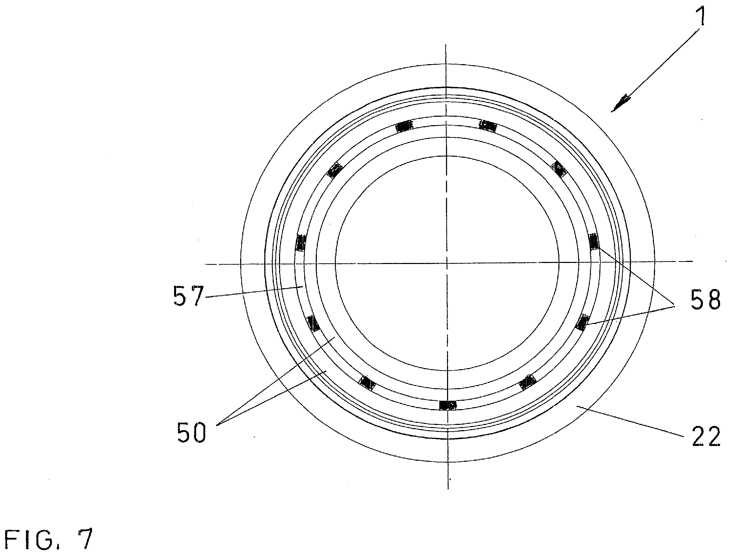

Zu diesem Problem zeigt die Fig. 7 eine besonders einfache Lösung. Hier ist eine Aufsicht auf das Kapselsystem 1 nach Fig. 6 von oben gezeigt, unter Weglassung der Versiegelungsfolie 24. Zuäusserst erkennt man den Flansch 22 der Haltekapsel 2, dem ein nach innen versetzt liegender, verbreiterten Flansch 50 der Extraktionskapsel 3 folgt. In diesem verbreiterten Flansch 50 ist nun ein umlaufender Spalt 57 gebildet, der von einer Anzahl Stege 58, die den inneren und äusseren Bereich des verbreiterten Flansches 50 verbinden, überbrückt wird. Wählt man für die Anzahl der Stege 58 eine Primzahl, im vorliegenden Fall sind es elf Stege 58, so muss man bezüglich den ebenfalls gleichmässig an der Perforationsplatte 44 angeformten Perforationsdorne 56 lediglich eine gerade Anzahl vorsehen, die nicht ein Vielfaches der Anzahl Stege 58 ist. So wird im schlechtesten Fall lediglich ein Perforationsdorn 56 auf einen der Stege 58 treffen. Dies wird entweder dazu führen, dass der entsprechende Steg 58 bricht, oder die Extraktionskapsel 3 sich leicht verdreht.

Die Versiegelungsfolie neigt generell beim Perforieren dazu, neben der Perforationsstelle zu reissen, insbesondere, wenn auf der Versiegelungsfolie 33 ein im ringförmigen Trog 4 durch die injizierte Flüssigkeit ein Druck aufgebaut wird. Damit erhält man sehr grosse Durchströmungsöffnungen in der Versiegelungsfolie 33. Hierdurch lassen sich auch nur teilweise oder gar nicht auflösende Bestandteile aus dem ringförmigen Trog 4 ausschwemmen. Diese werden sich über der Perforationsplatte 44, wenn auf die Arme 55 verzichtet wird und die Perforationsplatte bis zu den Dornen 56 vollständig geschlossen gestaltet ist, das aus dem ringförmigen Trog 4 ausströmende Gemisch aus Mischmedium, welches injiziert wird und dem in der Kammer untergebrachten Gut auf die Perforationsplatte 44 strömen. Auch ein Extraktionsmedium, welches durch die Extraktionskammer hindurch geflossen ist, vermischt sich hier mit dem Mischmedium, welches durch den ringförmigen Trog geströmt ist. Sind jedoch die Perforationsdorne 46 auf Armen 55 gehalten, so wird das Mischmedium, welches durch den ringförmigen Trog geströmt ist, in den rinnenförmigen Bereich des lagenunveränderlichen Randbereiches 49 gelangen und von dort über die Gelenkstelle 42 auf den zentrischen, plattenförmigen Teil des extraktionsseitigen Bodens 20, nämlich der Bodenplatte 48, während das Extraktionsmittel in gleicher Weise über die Perforationsplatte ebenso in den Bereich unter der Perforationsplatte 44 gelangt und sich dort mit dem Mischmedium vermischt. Die Verlängerungen der Perforationsmittel 43 bilden zum Teil dann die Strömungsschikanen 41, die auf der Bodenplatte 48 stehen. Bei dieser Version ist eine Abdeckung des Auslaufes 25 nicht erforderlich.

Sind jedoch die Perforationsdorne 56 auf einer bis vollständig nach aussen verlaufenden Perforationsplatte 44 angeordnet, so muss diese Perforationsplatte 44 entsprechende Ausströmungsöffnungen aufweisen, die die vermischten Medien mit den darin befindlichen Anteilen durchlassen, so dass diese in die Mischkammer 40 und von dort zur Auslauföffnung 25 gelangen können.

Ein derartiges Kapselsystem bedingt eine neue, auf dieses Kapselsystem angepasste Aufbereitungsmaschine. Diese muss nicht wie bisher lediglich Injektionsnadeln, die in die Extraktionskapsel eindringen, haben, sondern zusätzlich Injektionsnadeln, die in den ringförmigen Trog 4 münden. Zudem ist es sinnvoll, dass eine solche Zubereitungsmaschine die Möglichkeit hat, verschiedene flüssige Medien zu injizieren. Diese Medien können aber sowohl für die Extraktionskapsel 3 wie auch für den ringförmigen Trog 4 gleich sein und die gleiche Temperatur aufweisen, oder gleich sein und unterschiedliche Temperaturen aufweisen. Ferner können aber auch diese Medien das Mischmedium und das Extraktionsmedium unterschiedlich sein, je nach Anwendungsbereich, ob es sich hierbei um Nahrungsmittel oder chemische Substanzen handelt, die in der Extraktionskammer bzw. im ringförmigen Trog 4 anliegen, kommen die unterschiedlichsten Misch- und Extraktionsmedien in Frage. Zusätzlich können auch diese beiden Medien gleichzeitig oder nacheinander durch die Extraktionskammer bzw. durch den ringförmigen Trog injiziert werden. Die Vielzahl der Anwendungsmöglichkeiten dieses Kapselsystem ist schier unbegrenzt.

### Bezugszeichenliste:

- 1: Kapselsystem
- 2: Haltekapsel
- 3: Extraktionskapsel
- 4: ringförmiger Trog
- 20: extraktionsseitiger Boden der Haltekapsel 2
- 21: konische Mantelwand
- 22: Flansch der Haltekapsel
- 23: Stützmittel, radial verlaufende Rippen
- 24: Versiegelungsfolie
- 25: Auslauföffnung
- 26: injektionsseitige Öffnung
- 27: Stufe in Rippen 23
- 28: zentrierende Rampe
- 29: Durchströmungsöffnung
- 30: injektionsseitiger Boden der Extraktionskapsel 3
- 31: extraktionsseitige Öffnung
- 32: Flansch an Extraktionskapsel 3
- 33: Versiegelungsfolie der Extraktionskapsel 3
- 34: konische Mantelwand
- 35: randständiger Schweisswulst
- 40: Mischkammer
- 41: Strömungsschikanen
- 42: ringförmige Gelenkstelle
- 43: Perforationsmittel
- 44: Perforationsplatte
- 46: Siebplatte oder Siebmatte
- 47: ringförmige Auflageversteifung
- 48: zentrischer plattenförmiger Teil des extraktionsseitigen Bodens 20, Bodenplatte
- 49: lageunveränderlicher Randbereich
- 50: verbreiteter Flansch der Extraktionskapsel
- 51: Durchbruchöffnungen im verbreiteten Flansch 50
- 52: umlaufender Absatz
- 53: Durchbrüche verschliessende Folie
- 54: Haltemittel für Perforationsplatte
- 55: Arme
- 56: Perforationsdorne
- 57: umlaufender Spalt
- 58: Stege
- 59: Versteifungsrippen

## Patentansprüche

1. Kapselsystem (1) mit einer geschlossenen Extraktionskapsel (3) mit einem injektionsseitigen Boden (30) mit angeformter, konisch zur Extraktionsseite sich erweiternder, mit einer Versiegelungsfolie verschlossenen Öffnung (31), mit einem peripher nach aussen gerichteten Flansch (32), wobei die Extraktionskapsel in einer spritzgusstechnisch aus Kunststoff gefertigten Haltekapsel (2) gehalten ist, wobei die Haltekapsel (2) einen extraktionsseitigen Boden mit anschliessender zur Injektionsseite hin konisch erweiterten Mantelwand aufweist, die in eine mit einer Versiegelungsfolie (24) verschlossenen Öffnung, mit einem nach aussen gerichteten Flansch (22) mündet, wobei zwischen den beiden Kapseln (2, 3) ein befüllbarer ringförmiger Trog (4) verbleibt, so, dass von der Injektionsseite in die Extraktionskapsel (3) ein Extraktionsmedium und in den ringförmigen Trog (4) ein Mischmedium injizierbar ist, und dass das Extraktionsmedium durch die Extraktionskapsel (3) fliesst und um die Extraktionskapsel (3) herum ein Mischmedium fliesst und der Boden (20) der Haltekapsel (2) mindestens eine Auslauföffnung (25) besitzt.

2. Kapselsystem nach Anspruch 1, **dadurch gekennzeichnet, dass** der Boden der Haltekapsel (2) einen lageunveränderlichen Randbereich (49) hat und daran anschliessend über eine ringförmige Gelenkstelle (42) eine bewegliche Bodenplatte (48) angeformt ist, die direkt oder mittelbar mit Perforationsmitteln (43) versehen ist, die unter Krafteinwirkung auf die Bodenplatte (48) die Versiegelungsfolie (33) der Extraktionskapsel (3) durchstossen.

3. Kapselsystem nach Anspruch 1, **dadurch gekennzeichnet, dass** die Haltekapsel (2) mit Mitteln (23, 52) versehen ist, die eine Konsole bilden, auf der die in die Haltekapsel eingelegte Extraktionskapsel (3) ruht.

4. Kapselsystem nach Anspruch 3, **dadurch gekennzeichnet, dass** das Mittel, welches die Konsole bildet, eine Vielzahl von radial ausgerichteten Rippen(23) ist, in denen je eine Stufe (27) eingeformt ist, wobei alle Stufen (27) in einer Ebene parallel zum umlaufenden Flansch (22) der Haltekapsel (2)liegen.

5. Kapselsystem nach Anspruch 3, **dadurch gekennzeichnet, dass** das Mittel, welches die Konsole bildet, ein im bodennahen Bereich der Mantelwand geformter umlaufender Absatz (52) ist.

6. Kapselsystem nach Anspruch 4, **dadurch gekennzeichnet, dass** die Stufe (27) in den radial ausgerichteten Rippen von der Mantelwand (21) distanziert ist, so dass das Mischmedium zwischen dem Flansch (32) der Extraktionskapsel (3) und der Mantelwand (21) der Haltekapsel (2)sowie zwischen jeweils zwei benachbarten, radial ausgerichteten (23) Rippen gebildeten Durchströmungsöffnung (29) zu fliessen vermag. 7

7. Kapselsystem nach Anspruch 4, **dadurch gekennzeichnet, dass** die radial ausgerichteten Rippen (23) oberhalb der Stufe (27)nach oben und aussen geneigt in die Mantelwand (21) auslaufen.

8. Kapselsystem nach Anspruch 2 und 4, **dadurch gekennzeichnet, dass** die radial ausgerichteten Rippen (23) bis in den lageunveränderlichen Randbereich (49) des Bodens (20) der Haltekapsel (2) sich erstrecken.

9. Kapselsystem nach Anspruch 5, **dadurch gekennzeichnet, dass** die Extraktionskapsel (3) einen verbreiteten Flansch (50) aufweist, der auf dem umlaufenden Absatz (52) aufliegt und der verbreitere Flansch (50) Durchbruchöffnungen (51) aufweist, durch welche das Mischmedium strömen kann.

10. Kapselsystem nach Anspruch 9, **dadurch gekennzeichnet, dass** die auf den verbreiteten Flansch (50) der Extraktionskapsel (3) aufgebrachte Versiegelungsfolie (33) die Durchbruchöffnungen abdecken.

11. Kapselsystem nach Anspruch 9, **dadurch gekennzeichnet, dass** im verbreiteten Flansch (50) der Extraktionskapsel (3) ein umlaufender Spalt (57) gebildet ist, der von einer Anzahl Stege (58) überbrückt wird und die Durchbruchöffnungen (53) zwischen Stegen von der Versiegelungsfolie (33) abgedeckt sind.

12. Kapselsystem nach Anspruch 2, **dadurch gekennzeichnet, dass** auf der Bodenplatte (48) oder von dieser distanziert eine Perforationsplatte (44) mit den Perforationsmitteln (43) sich abstützt.

13. Kapselsystem nach Anspruch 11 und 12, **dadurch gekennzeichnet, dass** an der Bodenplatte (20) Durchstossdorne (56) angebracht sind, die auf die Durchbruchöffnungen (51) ausgerichtet sind.

14. Kapselsystem nach Anspruch 9, **dadurch gekennzeichnet, dass** die Versiegelungsfolie (33) nur den inneren Bereich des verbreiteten Flansches (50) abdeckt und die Durchbruchsöffnungen (51) frei lässt.

15. Kapselsystem nach Anspruch 5, **dadurch gekennzeichnet, dass** im lageunveränderlichen Randbereich (49) des Bodens (20) der Haltekapsel (2) radial ausgerichtete Versteifungsrippen (59) angeformt sind.

## Claims

1. A capsule system (1) with a closed extraction capsule (3) having an injection-side bottom (20) and a molded on opening (31) that expands conically to the extraction side and is closed with a sealing film, and a peripherally outwardly aligned flange (32), wherein the extraction capsule is held in a holding capsule (2) injection molded out of plastic, wherein the holding capsule (2) has an extraction-side bottom with an adjoining lateral wall that expands conically toward the injection side, which ends with an outwardly oriented flange (22)defining an opening closed with a sealing film (24), wherein a fillable, annular trough (4) remains between the two capsules (2, 3), making it possible to inject an extraction medium from the injection side into the extraction capsule, and a mixing medium into the annular trough (4), and in that the extraction medium flows through the extraction capsule (3), and a mixing medium flows around the extraction capsule (3), and the bottom (20) of the holding capsule (2) has at least one outlet opening (25).

2. The capsule system according to claim 1, **characterized in that** the bottom of the holding capsule (2) has a stationary edge area (40), and an adjoining bottom plate (48) movable via an annular hinge area (42) is molded thereto, which bottom plate is directly or indirectly provided with perforation means (43), which penetrate through the sealing film (33) of the extraction capsule (3) when force is applied to the bottom plate (48).

3. The capsule system according to claim 1, **characterized in that** the holding capsule (2) is provided with means (23, 52) that form a console, upon which rests the extraction capsule (3) placed into the holding capsule.

4. The capsule system according to claim 3, **characterized in that** the means comprising the console consists of a variety of radially aligned ribs (23), which each have molded into them a step (27), wherein all steps (27) lie in a plane parallel to the circumferential flange (22) of the holding capsule (2).

5. The capsule system according to claim 3, **characterized in that** the means forming the console is a circumferential shoulder (52) formed in the area of the lateral wall close to the bottom.

6. The capsule system according to claim 4, **characterized in that** the steps (27) in the radially aligned ribs are spaced apart from the lateral wall (21), so that the mixing medium can flow between the flange (32) of the extraction capsule (3) and the lateral wall (21) of the holding capsule (2), as well as through a through-flow opening (29) formed between a respective two adjacent, radially aligned ribs (23).

7. The capsule system according to claim 4, **characterized in that** the radially aligned ribs (23) are upwardly and outwardly inclined above the step (27) and run out into the lateral wall (21).

8. The capsule system according to claim 2 and 4, **characterized in that** the radially aligned ribs (23) extend into the stationary edge area (49) of the bottom (20) of the holding capsule (2).

9. The capsule system according to claim 5, **characterized in that** the extraction capsule (3) has an expanded flange (50) that rests on the circumferential shoulder (52), and the expanded flange (50) has passage openings (51) through which the mixing medium can flow.

10. The capsule system according to claim 9, **characterized in that** the sealing film (33) applied to the expanded flange (50) of the extraction capsule (3) covers the passage openings.

11. The capsule system according to claim 9, **characterized in that** a circumferential gap (57), which is bridged by a number of bridges (58) is formed in the expanded flange (50) of the extraction capsule (3), and the passage openings (53) between the bridges are covered by the sealing film (33).

12. The capsule system according to claim 2, **characterized in that** a perforation plate (44) with the perforation means (43) is supported on the bottom plate (48) or spaced apart from the latter.

13. The capsule system according to claim 11 and 12, **characterized in that** perforation spikes (56) aligned to the passage openings (51) are secured to the bottom plate (20).

14. The capsule system according to claim 9, **characterized in that** the sealing film (33) only covers the inner area of the expanded flange (50), and leaves the passage openings (51) exposed.

15. The capsule system according to claim 5, **characterized in that** radially aligned stiffening ribs (59) are molded in the stationary edge area (49) of the bottom (20) of the holding capsule (2).

## Revendications

1. Système de capsule (1), pourvu d'une capsule d'extraction (3) close, avec un fond inférieur (30) du côté injection, avec une ouverture (31) surmoulée, s'évasant en forme de cône vers le côté extraction, fermée par un film de scellement, avec une bride (32) périphérique dirigée vers l'extérieur, la capsule d'extraction étant maintenue dans une capsule de maintien (2) fabriquée en plastique par technique de moulage par injection, la capsule de maintien (2) comportant un fond inférieur du côté extraction, pourvu d'une paroi d'enveloppe évasée en forme de cône vers le côté injection qui s'y raccorde, qui débouche dans une ouverture obturée par un film de scellement (24), avec une bride (22) dirigée vers l'extérieur, entre les deux capsules (2, 3) restant une gouttière (4) de forme annulaire, susceptible d'être remplie, de sorte qu'à partir du côté injection, un milieu d'extraction soit injectable dans la capsule d'extraction (3) et un milieu de mélange soit injectable dans la gouttière (4) de forme annulaire et en ce que le milieu d'extraction coule à travers la capsule d'extraction (3) et un milieu de mélange coule autour de la capsule d'extraction (3) et le fond inférieur (20) de la capsule de maintien (2) dispose d'au moins une ouverture d'écoulement (25).

2. Système de capsule selon la revendication 1, **caractérisé en ce que** le fond inférieur de la capsule de maintien (2) dispose d'une zone de bordure (49) à position immuable et **en ce que** se raccordant sur celle-ci est surmoulée par l'intermédiaire d'un emplacement d'articulation (42) une plaque d'embase (48) mobile, qui est munie directement ou indirectement de moyens de perforation (43), qui sous l'effet d'une force exercée sur la plaque d'embase (48) percent le film de scellement (33) de la capsule d'extraction (3).

3. Système de capsule selon la revendication 1, **caractérisé en ce que** la capsule de maintien (2) est munie de moyens (23, 52) qui forment une console, sur laquelle repose la capsule d'extraction (3) insérée dans la capsule de maintien.

4. Système de capsule selon la revendication 3, **caractérisé en ce que** le moyen qui forme la console est une pluralité de nervures (23) orientées en direction radiale, dans chacune desquelles est façonné un échelon (27), tous les échelons (27) se situant dans un plan parallèle à la bride (22) périphérique de la capsule de maintien (2).

5. Système de capsule selon la revendication 3, **caractérisé en ce que** le moyen qui forme la console est un talon (52) périphérique façonné dans la région proche du fond inférieur de la paroi d'enveloppe.

6. Système de capsule selon la revendication 4, **caractérisé en ce que** l'échelon (27) dans les nervures orientées en direction radiale est distancé de la paroi d'enveloppe (21), de sorte que le milieu de mélange puisse couler entre la bride (32) de la capsule d'extraction (3) et la paroi d'enveloppe (21) de la capsule de maintien (2), ainsi qu'à travers une ouverture de passage (29) formée entre chaque fois deux nervures voisines (23), orientées en direction radiale.

7. Système de capsule selon la revendication 4, **caractérisé en ce qu'**au-delà de l'échelon (27), les nervures (23) orientées en direction radiale s'écoulent dans la paroi d'enveloppe (21) vers le haut et en inclinaison vers l'extérieur.

8. Système de capsule selon la revendication 2 et 4, **caractérisé en ce que** les nervures (23) orientées en direction radiale s'étendent jusque dans la zone de bordure (49) à position immuable du fond inférieur (20) de la capsule de maintien (2).

9. Système de capsule selon la revendication 5, **caractérisé en ce que** la capsule d'extraction (3) comporte une bride (50) élargie qui repose sur le talon (52) périphérique et **en ce que** la bride (50) élargie comporte des orifices de percée (51) à travers lesquels le milieu de mélange peut s'écouler.

10. Système de capsule selon la revendication 9, **caractérisé en ce que** le film de scellement (33) appliqué sur la bride (50) élargie de la capsule d'extraction (3) recouvre les orifices de percée.

11. Système de capsule selon la revendication 9, **caractérisé en ce que** dans la bride (50) élargie de la capsule d'extraction (3) est formée une fente (57) périphérique qui est chevauchée par une quantité de barrettes (58) et **en ce que** les orifices de percée (53) entre des barrettes sont recouvertes par le film de scellement (33).

12. Système de capsule selon la revendication 2, **caractérisé en ce que** sur la plaque d'embase (48) ou à distance de celle-ci s'appuie une plaque perforée (44) pourvue des moyens de perforation (43).

13. Système de capsule selon la revendication 11 et 12, **caractérisé en ce que** sur la plaque d'embase (20) sont montées des épines de perçage (56) qui sont orientées en direction des orifices de percée (51).

14. Système de capsule selon la revendication 9, **caractérisé en ce que** le film de scellement (33) ne recouvre que la région intérieure de la bride (50) élargie et laisse libre les orifices de percée (51).

15. Système de capsule selon la revendication 5, **caractérisé en ce que** dans la zone de bordure (49) à position immuable du fond inférieur (20) de la capsule de maintien (2) sont surmoulées des nervures de renfort (59) orientées en direction radiale.
